# EUROPEAN PATENT SPECIFICATION

(11) **EP 2 123 489 B1**
(45) Date of publication and mention of the grant of the patent: **25.01.2012**
(21) Application number: 08710842.9
(22) Date of filing: 06.02.2008
(51) Int. Cl.: B60C 17/00

(54) **SAFETY TIRE**
SICHERHEITSREIFEN
PNEU DE SÉCURITÉ

(30) Priority: 06.02.2007 JP 2007026292
(43) Date of publication of application: 25.11.2009
(73) Proprietor: Bridgestone Corporation, Tokyo 104-8340 (JP)
(72) Inventor: FUJIKI, Kanji c/o BRIDGESTONE CORPORATION Technical Center, Kodaira-shi Tokyo 187-8531 (JP)
(74) Representative: Whalley, Kevin
(86) International application number: PCT/JP2008/051945
(87) International publication number: WO 2008/096786

(56) References cited:
- EP-A1- 0 515 226
- WO-A1-00/73093
- JP-A- 05 238 215
- JP-A- 2001 138 721
- JP-A- 2003 500 281
- JP-A- 2004 306 771
- JP-A- 2005 280 459
- JP-A- 2005 503 956
- JP-A- 2006 264 492

## Description

### Technical Field

The present invention relates to a safety tire which can continuously run even when an inner pressure applied to the tire is reduced due to external damage, blowout and the like, a so-called run flat tire, specifically to a safety tire which is excellent in both of durability (run flat durability) in running after the tire is damaged and a vibration riding comfort characteristic (riding quality) in normal running.

### Background Art

In recent years, enhancement in performances of tires is strongly required for high speed driving of vehicles. On the other hand, a requirement for reduction in a weight of vehicles needs such spare tires as tires which can bear a load and continuously run even when an inner pressure applied to the tire is reduced due to blowout and the like.

Pneumatic radial tires (run flat tire) having a structure in which an inner surface side of a carcass layer in an area extending from the vicinity of an upper end of a rim flange to an end part of a belt layer is reinforced by a crescent reinforcing rubber layer are proposed as representative tires thereof and put into practical use.

In conventional run flat tires, a side reinforcing layer comprising a rubber composition or a composite of a rubber composition and fibers is provided because of necessity to enhance rigidity of a side wall part.

In general, a side wall part of a tire is deformed to a large extent in running when an inner pressure of the tire is reduced due to blowout and the like, that is, in a run flat running state, and in proportion therewith, a side reinforcing layer is deformed as well to a large extent so that a large amount of heat is generated to rise a temperature of the tires to 200°C or higher in a certain case. In such state, the side reinforcing layer exceeds a breaking limit, and the tire leads to troubles in a certain case.

An increase in a volume of rubber such as an increase in the maximum thicknesses of a side reinforcing layer and a bead filler provided or use of a hard rubber is known as means for gaining time spent up to the above troubles (refer to, for example, patent document 1). Employment of the above methods sometimes bring about unfavorable situations such as deterioration in a riding quality, an increase in a mass of the tire and a rise in a noise level.

On the other hand, if a side reinforcing layer and a bead filler provided are reduced in volumes in order to avoid the situations described above, for example, deterioration in a riding quality, there has been brought about the problem that a load in run flat can not be supported to deform a side wall part of the tire to a large extent so that an increase in heat generation of a rubber composition is brought about to result in allowing the tire to cause troubles in an earlier stage. Also when rubber used is reduced in elasticity by changing compounded materials, the existing situation is that a load in run flat can not be supported as well to enlarge repetitive deformation of a side wall part of the tire to a large extent so that an increase in heat generation of a rubber composition is brought about to result in allowing the tire to cause troubles in an earlier stage.

In order to meet the above situations, tires having a side reinforcing layer which comprises soft elastic porous parts in rubber having high rigidity (refer to, for example, patent document 2), tires in which two kinds of hard and soft rubbers are combined and in which the soft rubber is provided in a part compressed highliest (refer to, for example, patent document 3) and tires having a side reinforcing layer in which rubbers having different hardnesses are provided in a wavelike form (refer to, for example, patent documents 4 and 5) are tried as tires in which durability in run flat is consistent with a riding quality in normal running.

However, the tires having a side reinforcing layer which are described in the above documents do not yet sufficiently satisfy durability in run flat and a riding comfort characteristic in normal running. Further, when two kinds of hard and soft rubbers are used, the existing situation is that when a gap in rigidity between the rubber layers grows larger, the problem that a separation trouble between the layers is liable to be caused is brought about.
Patent document 1: Japanese Patent Application Laid-Open Hei 11 No. 263106 (claims, examples and others)
Patent document 2: Japanese Patent Application Laid-Open No. 2002-19431 (claims, examples and others)
Patent document 3: Japanese Patent Application Laid-Open Hei 5 No. 238215 (claims, examples and others)
Patent document 4: Japanese Patent Application Laid-Open No. 2001-138721 (claims, examples and others)
Patent document 5: Japanese Patent Application Laid-Open No. 2000-343914 (claims, examples and others)

### Disclosure of the Invention

### Problems to be Solved by the Invention

The present inventors used safety tires having a structure in which they are reinforced by a crescent reinforcing rubber layer to carry out a run flat running test, and investigated a trouble state thereof to find that cracks were produced from a maximum deformed part of the crescent reinforcing rubber layer, that is, an inner surface side of a maximum strain part in run flat running after an inner pressure was reduced and that they developed in a width direction and finally induced breakage of cords in a carcass layer called CBU to make running impossible in almost all cases.

The above phenomenon was investigated to result in finding that an elastic performance of the crescent reinforcing rubber layer described above was maintained in an early stage of run flat running but the reinforcing rubber layer itself was thermally degraded due to internal heat generation as a running distance was increased to allow the reinforcing rubber layer to be reduced in an elastic performance, whereby an input strain of the maximum strain part grew larger so that the side reinforcing layer exceeded a breaking limit to generate cracks.

Then, if a thickness of the reinforcing rubber layer described above is increased over the whole part thereof in order to solve the problems described above, reduction in an elastic performance of the reinforcing rubber layer which originates in the thermal degradation described above can be prevented with the deformation itself of the reinforcing rubber layer inhibited.

However, if a thickness of the reinforcing rubber layer is increased over the whole part thereof, a riding quality in normal running is reduced to a large extent.

In general, a tire in which durability in run flat is consistent with a riding quality in normal running is provided with a constitution in which a crescent reinforcing rubber layer comprises different layers, that is, a high elastic rubber layer disposed at a carcass layer side of a central part of a side wall part and a crack resistant rubber layer having lower hardness and lower elasticity than those of the high elastic rubber layer which is disposed at an inner side of the high elastic rubber layer in a tire axis direction, whereby the high elastic rubber layer disposed at the carcass layer side of the central part of the side wall part supports a load in run flat running; and the crack resistant rubber layer is disposed at an inner surface side of a part where a maximum strain part is produced in run flat running to make it possible to inhibit cracks from being generated and improve durability in run flat running to a large extent.

That is, in the constitution of the above reinforcing rubber, a thickness of the reinforcing rubber layer does not have to be large over the whole part thereof to make it possible to solve deterioration in a riding quality in normal running which originates in an increase in the thickness and to improve durability in run flat running to a large extent.

However, when using a side reinforcing rubber comprising two hard and soft layers, a stress is concentrated, as described above, due to a gap in rigidity in the vicinity of the interface which is caused by a difference in elastic moduli of the rubbers, and the phenomenon that cracks are generated from the interface part is brought about in a certain case to result in causing the problem of troubles in an earlier stage.

Then, in light of the problems of the conventional art and the existing situations each described above, the present invention has been made in order to solve them, and an object of the present invention is to provide a safety tire which is excellent in a riding quality in normal running while maintaining run flat durability to be a performance of a run flat tire.

### Means for Solving the Problems

In order to solve the problems of the conventional art described above, the present inventors have found that in order to remove a gap in rigidity which is the cause of cracks generated in an interface part, an elastic modulus is gradually changed extending from a carcass layer side to an inner liner layer side to thereby make it possible to inhibit interfacial cracks from being generated in run flat running, whereby a safety tire meeting the object described above has been obtained with success and thus the present invention has come to be completed.

That is, the present invention comprises the following items (1) to (5).
(1) A safety tire comprising at least a bead part, a carcass layer, a tread part, an inner liner layer and a crescent annular side reinforcing rubber layer, wherein in the side reinforcing rubber layer, a 100% tension modulus is gradually reduced in a range of 0.1 to 1.0 MPa in terms of a difference between adjacent 2 mm layers axially inwardly at any part in a radial direction in the reinforcing rubber layer.
(2) The safety tire as described in the above item (1), wherein the side reinforcing rubber layer comprises a rubber having higher elasticity at the outer side than at the inner side in an axial direction.
(3) The safety tire as described in any one of the above items (1) or (2), wherein the side reinforcing rubber layer has a 100 % tension modulus of 6.0 MPa or more at the outer side in the axial direction.
(4) The safety tire as described in any of the above items (1) to (3), wherein the side reinforcing rubber layer has a 100 % tension modulus of 12.0 MPa or less at the inner side in the axial direction and comprises a rubber having lower elasticity at the inner side than at the outer side in the axial direction.

According to the present invention, provided by endowing a side reinforcing rubber layer with an elasticity distribution in a axial direction is a safety tire in which a riding quality in normal running can be improved, in which an increase in flexure of the tire and generation of cracks in an inner face part are inhibited in run flat running, in which generation of interfacial cracks in a reinforcing rubber is inhibited as well and which improves run flat durability.

Brief Explanation of Drawings
Fig. 1 is an outline cross-sectional drawing of a safety tire showing one example of the embodiments of the present invention.
Fig. 2 (a) is an explanatory drawing for explaining the meaning of "adjacent 2 mm layers at any part in a radial direction in a side reinforcing rubber layer", and (b) is an explanatory drawing for explaining the inner side and the outer side in the axial direction in the side reinforcing rubber layer.

### Explanation of Numerical References

A Safety tire
1 Bead part
2 Carcass layer
3 Reinforcing belt
4 Tread part
5 Side wall part
6 Inner liner layer
7 Side reinforcing rubber layer

### Best Mode for Carrying Out the Invention

The embodiments of the present invention shall be explained below in details while referring to the drawings.

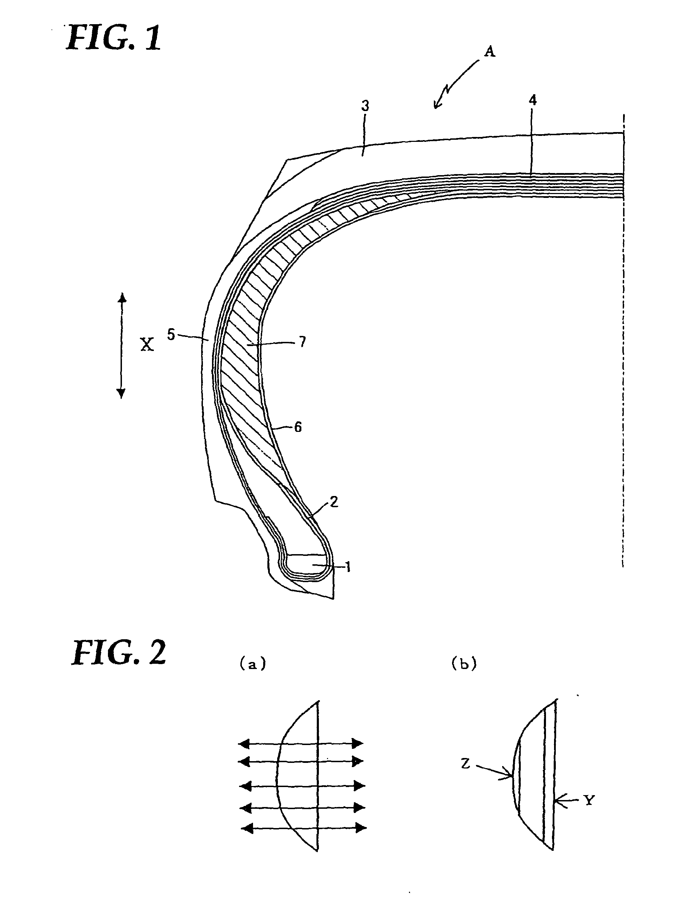

Fig. 1 is an outline cross-sectional drawing of a left half of a safety tire cut along a meridian which shows one example of the embodiments of the present invention. Incidentally, the present invention shall by no means be restricted by the outline cross-sectional drawing.

The safety tire A of the present embodiment comprises, as shown in Fig. 1, a left and right pair of bead parts 1, at least one carcass layer 2 coupled from one of the bead parts 1 to the other one thereof, a tread part 3 disposed at the outside of the carcass layer 2 in a tire radial direction, a reinforcing belt 4 disposed between the tread rubber layer and a crown area of the carcass layer, a pair of side wall parts 5 disposed left and right at the tread part 3, an inner liner layer 6 located at the inside of the carcass layer 2 and a pair of annular side reinforcing rubber layers 7 having a crescent cross-section which are located between the carcass layer and the inner liner layer 6 in a part corresponding to the side wall part.

In the present invention, in order to remove a gap in rigidity which is the cause of cracks generated in an interface part, assumed is a constitution in which an elastic modulus of the side reinforcing rubber layer 7 is gradually changed extending from a carcass layer side to an inner liner layer side, to be specific, a constitution in which in the side reinforcing rubber layer 7, an elastic modulus is gradually reduced in a range of 0.1 to 1.0 MPa, preferably 0.1 to 0.7 MPa and more preferably 0.1 to 0.3 MPa in terms of a difference in a 100 % tension modulus (M100) of adjacent 2 mm layers at any part in a radial direction X in the reinforcing rubber layer 7 extending from the carcass layer side 2 to the inner liner layer side 6.

The term "adjacent 2 mm layers at any part in a radial direction in the reinforcing rubber layer 7 extending from the carcass layer side 2 to the inner liner layer side 6" prescribed in the present invention means that layers obtained by cutting the reinforcing rubber 7 in a direction X in Fig. 1, which is a radial direction (along the shaft direction) extending from the carcass layer side 2 to the inner liner layer side 6 are the adjacent 2 mm layers if a position cutting the reinforcing rubber layer 7 is at any part in a radial direction and means, as shown in Fig. 2 (a), that they are 2 mm apart on any arrow. Further, "the 100 % tension modulus (M100)" prescribed in the present invention shows a 100 % tension modulus (M100) according to ASTM D412.

When a gap in rigidity exceeding 1.0 MPa in terms of a difference in a 100 % tension modulus (M100) of the adjacent 2 mm layers described above is present, interfacial cracks are liable to be generated, and on the other hand, if a difference in a 100 % tension modulus (M100) is less than 0.1 MPa, the riding comfort characteristic is deteriorated.

In order to allow an elastic modulus of the adjacent 2 mm layers in the reinforcing rubber layer 7 to be gradually changed in a range of 0.1 to 1.0 MPa, a side reinforcing rubber prepared by laminating rubber compositions having different conformations can be used. The conformations can be obtained by changing the kind and the amount of vulcanizing agents (sulfur and a vulcanization accelerator) or the kind and the amount of fillers (carbon black, silica and the like). A lamination number of the reinforcing rubber layer 7 is varied according to the kind of the tire and the tire size, and it includes a side reinforcing rubber layer obtained by laminating 5 to 20 layers.

When the same rubber composition is used, a rubber member can be preliminarily vulcanized to allow vulcanization to proceed only at a carcass layer side or the vulcanization conditions of the tire are varied so that an elastic modulus of the adjacent 2 mm layers in the side reinforcing rubber layer 7 can gradually be changed extending from the carcass layer side to the inner liner layer side.

A mode in which an elastic modulus of the adjacent 2 mm layers in the side reinforcing rubber layer 7 is gradually changed is preferably a mode in which an elastic modulus thereof is changed at a fixed (even) rate in every adjacent 2 mm layers. A maximum thickness of the side reinforcing rubber layer 7 is, though varied according to the tire kind, the tire size and the like, preferably 5 to 20 mm, more preferably 5 to 15 mm.

In more preferred embodiment, the side reinforcing rubber layer 7 described above is preferably a rubber having higher elasticity at the outer side than at the inner side in an axial direction, and it has a 100 % tension modulus of preferably 6.0 MPa or more, more preferably 7 to 11 MPa at the outer side in the axial direction.

Preferably assumed is a constitution in which the side reinforcing rubber layer has a 100 % tension modulus of 12 MPa or less, preferably 3 to 7 MPa at the inner side in the axial direction and in which it is a rubber having lower elasticity at the inner side than at the outer side in the axial direction.

In the present invention, "inner side in an axial direction" means, as shown in Fig. 2 (b), 2 mm (Y in the drawing) from the innermost layer (the reinforcing rubber part adjacent to the inner liner layer) in the axial direction, and "outer side in an axial direction" means 2 mm (Z in the drawing) from the outermost layer in the axial direction.

Further, if a difference in a 100 % tension modulus between the carcass layer 2 and the inner liner layer 6 is 0.5 MPa or more, preferably 1.0 MPa or more (to 7.0 MPa), the durability in run flat running can be allowed to be further consistent with the riding quality in normal running to a large extent.

In the safety tire of the present invention thus constituted, assumed is a constitution to provide the side reinforcing rubber layer with an elasticity distribution in which an elastic modulus is gradually decreased in a range of 0.1 to 1.0 MPa in terms of a difference in a 100 % tension modulus of the adjacent 2 mm layers at any part in the radial direction in the reinforcing rubber extending from the carcass layer side to the inner liner layer side, preferably an elasticity distribution in which the elastic modulus is evenly decreased, whereby obtained is a safety tire in which a riding comfort characteristic in normal running can be improved, in which an increase in flexure of the tire and generation of cracks in an inner face part are inhibited in run flat running, in which generation of interfacial cracks in the reinforcing rubber is inhibited as well and which improves run flat durability.

In particular, the durability in run flat running can be allowed to be further consistent with the riding quality in normal running to a large extent by setting a 100 % tension modulus thereof to 6 MPa or more at the outer side in the axial direction in the side reinforcing rubber which comprises a rubber having higher elasticity at the outer side than at the inner side in the axial direction, and setting a 100 % tension modulus thereof to 12 MPa or less at the inner side in the axial direction in the side reinforcing rubber which comprises a rubber having lower elasticity at the inner side than at the outer side in the axial direction.

The safety tire of the present invention shall not be restricted to the embodiments described above and can be varied in various manners as long as the scope of the present invention is not changed.

In the embodiments described above, the safety tire has been explained by the constitution of the safety tire comprising, as shown in Fig. 1, a left and right pair of the bead parts 1, at least one carcass layer 2 coupled from one of the bead parts 1 to the other one thereof, the tread part 3 and the reinforcing belt 4 which are disposed at the outside of the carcass layer 2 in a tire radial direction, a pair of the side wall parts 5 disposed left and right at the tread part 3, the inner liner layer 6 located at the inside of the carcass layer 2 and a pair of the annular side reinforcing rubber layers 7 having a crescent cross-section which are located between the carcass layer 2 and the inner liner layer 6 in a part corresponding to the side wall part. However, it shall not specifically be restricted as long as it is a safety tire comprising at least a bead part, a carcass layer, a tread part, an inner liner layer and a crescent annular side reinforcing rubber layer and having a constitution in which in the side reinforcing rubber layer described above, an elastic modulus is gradually decreased in a range of 0.1 to 1.0 MPa in terms of a difference in a 100 % tension modulus of adjacent 2 mm layers at any part in a radial direction in the reinforcing rubber extending from the carcass layer side to the inner liner layer side, preferably a constitution in which the elastic modulus is evenly decreased, and it may be, for example, a safety tire having a structure in which the carcass layer does not wind the bead part.

### EXAMPLES

Next, the present invention shall be explained in further details with reference to examples and comparative examples, but the present invention shall not be restricted to the following examples. In the present examples, examples in which side reinforcing rubbers obtained by laminating rubber compositions having different conformations are used shall be shown.

### Examples 1 to 3 and Comparative Examples 1 to 2

The respective rubber compositions were prepared by the following method to produce the respective safety tires.

Preparation of rubber compositions:
A rubber component comprising 30 mass parts of natural rubber and 70 parts by mass of butadiene rubber (cis-1,4-polybutadiene) was blended with 50 parts by mass of carbon black (FEF), 5.0 parts by mass of a process oil, 4.5 parts by mass of zinc oxide, 1.0 part by mass of stearic acid, 2.0 parts by mass of antioxidant 6C (N-phenyl-N'-(1,3-dimethylbutyl)-p-phenylenediamine), 3 parts by mass of vulcanization accelerator NS (N-t-butyl-2-benzothiazolylsulfeneamide), and a high temperature vulcanization accelerator and sulfur whose kinds and amounts are shown in the following Table 1 to prepare rubber compositions.

Production of tires:
Tires (tire size: 215/45ZR17) for passenger cars having different side reinforcing rubber layers were produced according to a conventional method. In respect to the structure of the side reinforcing rubber layer, a conventional rubber comprising a crescent single layer was used for a conventional side reinforcing rubber layer in Comparative Example 1. In Comparative Example 2, a side reinforcing rubber layer comprising hard and soft two layers was used. In Example 1, rubber compositions prepared by gradually varying the amounts of a vulcanization accelerator TOT and sulfur were used, and 10 layers in which an elastic modulus was changed at an even rate in every adjacent 2 mm layers were laminated to prepare a crescent side reinforcing rubber layer of 10 layers. In Examples 2 and 3, rubber compositions prepared by gradually varying the amounts of the vulcanization accelerator TOT and sulfur were used, and 20 layers or 8 layers in which an elastic modulus was changed at an even rate in every adjacent 2 mm layers were laminated to prepare crescent side reinforcing rubber layers of 20 layers or 8 layers. A maximum thickness in the whole of the respective side reinforcing rubber layers was 15 mm. A 100 % modulus (M100) of the side reinforcing rubber layer and a 100 % modulus (M100) between the adjacent layers were measured by the following method.

The respective trial tires thus obtained were used to evaluate a riding comfort characteristic and run flat durability by the following respective evaluation methods.

The results thereof are shown in the following Table 1. Durability of all the trial tires in applying an inner pressure stayed in a level of no problems.

Measuring method of M100 of side reinforcing rubber layer and M100 between adjacent layers:
M100 of the side reinforcing rubber layer and M100 between the adjacent layers were measured according to ASTM D412.

Evaluation method of run flat durability:
Each trial tire was mounted in a rim at a normal pressure and charged with air at an inner pressure of 230 kPa, and then it was left standing at room temperature of 38°C for 24 hours. Thereafter, a core of the valve was drawn to reduce the inner pressure to an atmospheric pressure, and the tire was subjected to a drum running test under the conditions of a load of 4.17 kN (425 kg), a speed of 89 km/hr and room temperature of 38°C. In the above test, a distance traveled until troubles were caused was designated as run flat durability and shown by an index, wherein the value obtained in Comparative Example 1 was set to a control (100). The larger the index is, the better the run flat durability is.

Evaluation method of riding comfort characteristic:
The trial tire was mounted in a passenger car to carry out a feeling test of a riding comfort characteristic by two professional drivers, and grades of 1 to 10 stages were given to determine an average value. The larger the index is, the better the riding comfort characteristic is.
Table 1

| | | Comparative Example | | Example | | |
|---|---|---|---|---|---|---|
| | | 1 | 2 | 1 | 2 | 3 |
| Reinforcing rubber layer | | Single rubber | Hard/soft 2 layer laminated rubber | 10 layer laminated rubber | 20 layer laminated rubber | 8 layer laminated rubber |
| Vulcanization accelerator TOT*¹ (phr*²) | | 1.5 | 3/0 | to 0*³ 3 to 0*³ | 3 to 0*⁴ | 3 to 0*⁵ |
| Sulfur (phr*²) | | 4 | 6/2 | 6 to 2*³ | 6 to 2*⁴ | 6 to 2*⁵ |
| Thickness (mm) | | 15 | 15 | 15 | 15 | 15 |
| M100 (MPa) | | 6.5 | 10/3 | 10 to 3*³ | 10 to 3*⁴ | 10 to 3*⁵ |
| Layer number | | 1 | 2 | 10 | 20 | 8 |
| M100 (MPa) between adjacent layers | | - | - | 0.778*⁶ | 0.368*⁷ | 1.0*⁸ |
| Tire evaluation results | Run flat | 100 | 125 | 170 | 175 | 160 |
| | durability Riding comfort characteristic | 5.0 | 6.5 | 7.5 | 7.5 | 7.5 |

*1: Tetrakis(2-ethylhexyl)thiuram disulfide (manufactured by Ouchi Shinko Chemical Industrial Co., Ltd.)
*2: Compounding parts by mass per 100 parts by mass of rubber component
*3: Compounding amounts were evenly adjusted to prepare 10 kinds of compounded rubbers having different elastic moduli *4: Compounding amounts were evenly adjusted to prepare 20 kinds of compounded rubbers having different elastic moduli *5: Compounding amounts were evenly adjusted to prepare 8 kinds of compounded rubbers having different elastic moduli *6: Change rate of M100 between adjacent layers in 10 layers was approximately even, and it was evenly reduced at any part *7: Change rate of M100 between adjacent layers in 20 layers was approximately even, and it was evenly reduced at any part *8: Change rate of M100 between adjacent layers in 8 layers was approximately even, and it was evenly reduced at any part

As apparent from the results shown in Table 1 described above, it has been found that the safety tires prepared in Examples 1 to 3 falling in the scope of the present invention prepared by using the side reinforcing rubber layers of 10 laminated layers, 20 laminated layers and 8 laminated layers in which an elastic modulus was changed at an even rate in every adjacent 2 mm layers can be improved in a riding comfort characteristic to a large extent while maintaining run flat durability at a practicable level as compared with those prepared in Comparative Examples 1 to 2.

### Industrial Applicability

The safety tire of the present invention is reinforced in a side wall part thereof and makes it possible to carry out good run flat running which has not ever been achieved, and it is excellent as well in a riding comfort characteristic and therefore has a high industrial utility value.

## Claims

1. A safety tire comprising at least a bead part (1), a carcass layer (2), a tread part (3), an inner liner layer (6) and a crescent annular side reinforcing rubber layer (7), **characterised in that** in the side reinforcing rubber layer, a 100% tension modulus of the reinforcing rubber is gradually reduced in a range of 0.1 to 1.0 MPa in terms of a difference between adjacent 2 mm layers axially inwardly at any part in a radial direction (X) in the reinforcing rubber layer.

2. The safety tire as described in claim 1, wherein the side reinforcing rubber layer comprises a rubber having higher elasticity at the outer side than at the inner side in an axial direction.

3. The safetty tire as described in claim 1 or 2, wherein the side reinforcing rubber layer has a 100% tension modulus of 6.0 MPa or more in the outer side in the axial direction.

4. The safety tire as described in any one of claims 1 to 3, wherein the side reinforcing rubber layer has a 100% tension modulus of 12.0 MPa or less at the inner side in the axial direction and comprises a rubber having lower elasticity at the inner side than at the outer side in the axial direction.

## Patentansprüche

1. Sicherheitsreifen, der mindestens aufweist: einen Wulstabschnitt (1); eine Karkassenlage (2); einen Laufflächenabschnitt (3); eine Innerlinerlage (6); und eine sichelförmige, ringförmige Seitenverstärkungsgummilage (7), **dadurch gekennzeichnet, dass** in der Seitenverstärkungsgummilage ein 100 % Zugmodul des Verstärkungsgummis in einem Bereich von 0,1 bis 1,0 MPa in Form einer Differenz zwischen benachbarten 2 mm-Lagen axial nach innen in einem Abschnitt in einer radialen Richtung (X) in der Verstärkungsgummilage allmählich reduziert wird.

2. Sicherheitsreifen nach Anspruch 1, bei dem die Seitenverstärkungsgummilage einen Gummi mit einer höheren Elastizität auf der äußeren Seite als auf der inneren Seite in einer axialen Richtung aufweist.

3. Sicherheitsreifen nach Anspruch 1 oder 2, bei dem die Seitenverstärkungsgummilage einen 100 % Zugmodul von 6,0 MPa oder mehr auf der äußeren Seite in der axialen Richtung aufweist.

4. Sicherheitsreifen nach einem der Ansprüche 1 bis 3, bei dem die Seitenverstärkungsgummilage einen 100 % Zugmodul von 12,0 MPa oder weniger auf der inneren Seite in der axialen Richtung aufweist und einen Gummi mit einer niedrigeren Elastizität auf der inneren Seite als auf der äußeren Seite in der axialen Richtung aufweist.

## Revendications

1. Bandage pneumatique de sécurité, comprenant au moins une partie de talon (1), une couche de carcasse (2), une partie de bande de roulement (3), une couche de gomme intérieure (6) et une couche de gomme de renforcement latérale annulaire en forme de croissant (7), **caractérisé en ce que** dans la couche de gomme de renforcement latérale, un module de tension à 100% de la gomme de renforcement est réduit progressivement dans un intervalle allant de 0,1 à 1,0 MPa, en termes d'une différence entre des couches adjacentes de 2 mm, axialement vers l'intérieur, au niveau d'une quelconque partie dans une direction radiale (X) de la couche de gomme de renforcement.

2. Bandage pneumatique de sécurité selon la revendication 1, dans lequel la couche de gomme de renforcement latérale comprend une gomme présentant une élasticité au niveau du côté externe supérieure à celle existant au niveau interne dans une direction axiale.

3. Bandage pneumatique de sécurité selon les revendications 1 ou 2, dans lequel la couche de gomme de renforcement latérale présente un module de tension à 100% de 6,0 MPa ou plus dans le côté externe dans la direction axiale.

4. Bandage pneumatique de sécurité selon l'une quelconque des revendications 1 à 3, dans lequel la couche de gomme de renforcement latérale présente un module de tension à 100% de 12,0 MPa ou moins au niveau du côté interne dans la direction axiale, et comprend une gomme présentant une élasticité au niveau du côté interne inférieure à celle existant au niveau du côté externe dans la direction axiale.
